(19)

**Europäisches Patentamt**
**European Patent Office**
**Office européen des brevets**

(11) **EP 4 358 196 A1**

(12) **EUROPÄISCHE PATENTANMELDUNG**

(43) Veröffentlichungstag:
**24.04.2024 Patentblatt 2024/17**

(21) Anmeldenummer: **23202959.5**

(22) Anmeldetag: **11.10.2023**

(51) Internationale Patentklassifikation (IPC):
*H01M 4/86* (2006.01)     *H01M 4/88* (2006.01)
*H01M 8/1018* (2016.01)     *H01M 8/10* (2016.01)

(52) Gemeinsame Patentklassifikation (CPC):
**H01M 4/8807; H01M 4/8657; H01M 4/8896;**
**H01M 8/1018;** H01M 4/8882; H01M 2008/1095

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität: **18.10.2022 DE 102022127234**

(71) Anmelder: **Carl Freudenberg KG**
**69469 Weinheim (DE)**

(72) Erfinder:
• **BOCK, Achim**
**69469 Weinheim (DE)**
• **KLEIN, Kristof**
**69469 Weinheim (DE)**
• **RAKOUSKY, Christoph, Dr.**
**64372 Ober-Ramstadt (DE)**
• **BARSCH, Hannes, Dr.**
**69123 Heidelberg (DE)**
• **LÖBLE, Matthias, Dr.**
**68309 Mannheim (DE)**
• **VON SPEE, Amélie**
**68165 Mannheim (DE)**

(54) **GASDIFFUSIONSLAGE MIT GERINGER PLASTISCHER VERFORMBARKEIT UND HOHER OBERFLÄCHENGÜTE UND VERFAHREN ZU IHRER HERSTELLUNG**

(57) Die vorliegende Erfindung betrifft ein Verfahren zur Herstellung einer Gasdiffusionslage für eine Brennstoffzelle mit einer geringen plastischen Verformbarkeit (einem geringen Setzverhalten) und einer guten Oberflächenbeschaffenheit sowie die nach diesem Verfahren erhältlichen Gasdiffusionslagen und eine Brennstoffzelle, die eine solche Gasdiffusionslage enthält.

EP 4 358 196 A1

**Beschreibung**

Die vorliegende Erfindung betrifft ein Verfahren zur Herstellung einer Gasdiffusionslage für eine Brennstoffzelle mit einer geringen plastischen Verformbarkeit (einem geringen Setzverhalten) und einer guten Oberflächenbeschaffenheit. Die Erfindung betrifft weiterhin die nach diesem Verfahren erhältlichen Gasdiffusionslagen und eine Brennstoffzelle, die eine solche Gasdiffusionslage enthält.

HINTERGRUND DER ERFINDUNG

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet ($H_2 \rightarrow 2\ H^+ + 2\ e^-$). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser ($1/2\ O_2 + 2\ H^+ + 2\ e^- \rightarrow H_2O$).

Für viele Anwendungen, speziell im automobilen Antriebsstrang, werden Niedertemperatur-Protonenaustauschmembran-Brennstoffzellen (PEMFC, proton exchange membrane fuel cells, auch als polymer electrolyte membrane fuel cells bezeichnet) eingesetzt, deren Kernstück eine Polymer-Elektrolyt-Membran (PEM) ist, die nur für Protonen (bzw. Oxoniumionen $H_3O^+$) und Wasser durchlässig ist und das Oxidationsmittel, im Allgemeinen Luftsauerstoff, räumlich vom Reduktionsmittel trennt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. Membran und Katalysatorschichten bilden eine Einheit, die auch als CCM (catalyst coated membrane) bezeichnet wird. Auf beiden Seiten der CCM befindet sich eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly). Zwischen den Membran-Elektroden-Einheiten sind Strömungsverteilerplatten (sogenannte Bipolarplatten) angeordnet, die Kanäle zur Versorgung der angrenzenden Kathode und Anode mit Prozessgasen sowie in der Regel zusätzlich innenliegende Kühlkanäle aufweisen.

Gasdiffusionslagen für Brennstoffzellen bestehen typischerweise aus einem Kohlefaser-Substrat, welches mit Fluor-Polymeren (z. B. PTFE) hydrophob ausgerüstet ist und anschließend mit einer mikroporösen Lage (MPL) flächig beschichtet wird. Die MPL besteht in der Regel aus einem fluorhaltigen Polymer als Binder (z. B. PTFE) sowie einem elektrisch leitfähigen Material, wobei häufig Kohlenstoffmaterialien, wie Ruß oder Graphit-Pulver, verwendet werden. Den Gasdiffusionslagen kommt eine wesentliche Bedeutung für die Funktion und Leistungsfähigkeit der Brennstoffzelle zu. Durch sie werden zum einen die in den Elektrodenreaktionen verbrauchten und entstehenden Prozesskomponenten transportiert und zum anderen die in den Halbzellenreaktionen gebildeten und verbrauchten Elektronen und die bei der Reaktion gebildete Wärme zu den Strömungsverteilerplatten geleitet. Zudem wirkt die GDL auch als mechanischer Ausgleich zwischen der makrostrukturierten Strömungsverteilerplatte und den Katalysatorschichten. Dazu müssen Bauteiltoleranzen ausgeglichen und der Kompressionsdruck verteilt werden. Die GDL dient auch als mechanischer Schutz der sehr dünnen Membranen, die in den Brennstoffzellen hohen Lasten ausgesetzt sind. Die empfindlichen Membranen sollen möglichst nicht durch die Gasdiffusionslage und ihre Komponenten beschädigt werden. Daher werden an die mechanischen Eigenschaften und die Oberflächeneigenschaften der GDL hohe Anforderungen gestellt.

Ein großes Problem bei faserbasierten Gasdiffusionslagen besteht in einer möglichen Schädigung der Membran der Brennstoffzelle durch eine inhomogene Oberfläche der Gasdiffusionslage oder herausstehende Fasern. Diese Fasern sind üblicherweise sehr steif und spröde. Außerdem bewegt sich die Faserdicke oft im Bereich der Dicke der Brennstoffzellenmembran, so dass die Gefahr besteht, dass die Membran durch Fasern penetriert und ein Kurzschluss verursacht wird. Im schlimmsten Fall kann ein Kurzschluss durch eine Faserpenetration der Membran zum Funktionsausfall des kompletten Brennstoffzellenstacks führen.

Weitere Fehlerquellen, die zu ähnlichen Ausfällen oder zu einer beträchtlichen Verringerung der Lebensdauer des Stacks führen können sind z.B. eine sehr raue MPL-Oberfläche oder in die MPL integrierte Verunreinigungen mit unterschiedlicher Härte. Da die Membran während des Betriebs der Brennstoffzelle erheblichem mechanischen Stress ausgesetzt werden kann, kann der Ausfall des Stacks auch erst zu einem späteren Zeitpunkt erfolgen.

Die Membran einer Brennstoffzelle ist sehr dünn, üblicherweise wenige $\mu m$ dick. Typische Dicken bewegen sich im Bereich von 8 bis 50 $\mu m$, wobei teilweise bereits Membranen mit Dicken von 5 $\mu m$ getestet werden. Es ist zu erwarten, dass mit zunehmendem Einsatz von Brennstoffzellen in automobilen Anwendungen ein Bedarf daran besteht, dass die Dicke aller flächigen Komponenten (Membranen, GDL/MPL, andere) weiter abnimmt. Ein sehr großes Performance-Problem wird durch interne Kurzschlüsse hervorgerufen, die durch herausstehende Fasern der auf der Membran aufliegenden GDLs hervorgerufen werden können. Es besteht daher ein Bedarf an einer Vermeidung von herausstehenden Fasern und/oder einer Glättung der MPL-Oberflächen der GDL.

GDLs werden beim Einsatz in Brennstoffzellen in der Regel stark verpresst (komprimiert). Die Eigenschaften von GDLs infolge einer Kompression können über den Anteil der elastischen und plastischen Verformung charakterisiert werden. Bei einer plastischen Verformung kehrt die Gasdiffusionslage nach einer Belastung nicht wieder zu 100% in die ursprüngliche Form zurück, sondern es bleibt eine permanente Formänderung. Die Eigenschaft eines Materials, seine Form permanent zu ändern, wenn eine Spannung angelegt wird, d.h. seine Verformbarkeit, wird auch mit dem Begriff "Setzen" bezeichnet. Materialien, die über eine geringe plastische Verformbarkeit verfügen, weisen ein geringes Setzverhalten auf. Das Setzverhalten der aus dem Stand der Technik bekannten GDLs ist noch verbesserungswürdig. Wird die GDL im Brennstoffzellenstapel unter hohen Drücken verspannt, so kommt es aufgrund der Verspannungskräfte und von dynamischen Kraftwechseln im Betrieb zum Setzen. Dies kann zu einem Verlust an Kompressionsdruck im Brennstoffzellenstapel führen, was die Materialwiderstände der meisten Komponenten und vor allem deren Übergangswiderstände im Stapel erhöht. Weiter kann eine Anpassung des Stapeldesigns erforderlich werden, wie der Einsatz zusätzlicher Federpakete zum Ausgleich des beim Setzen auftretenden Spannungsverlusts. Somit kann sich die Länge der Stapel und der notwendige Raum zu deren Einbau erhöhen. Des Weiteren können zusätzliche Maßnahmen bei der Stackmontage erforderliche werden, z.B. indem die Stapel beim Zusammenbau mehrfach verspannt und entlastet und erst danach fixiert werden, was den Fertigungsaufwand erhöht.

Die Entwicklung von alltagstauglichen Brennstoffzellen ist ein wichtiger Betrag bei der Energiewende von fossilen zu nachhaltigen Brennstoffen. Es besteht daher aktuell ein großer Bedarf an PEM-Brennstoffzellen, die hinsichtlich des beschriebenen komplexen Eigenschaftsprofils verbessert sind.

Es ist bekannt, zur Einstellung der anwendungstechnischen Eigenschaften von Brennstoffzellen Gasdiffusionslagen einzusetzen, die bezüglich wenigstens einer physikalischen oder chemischen Eigenschaft einen Gradienten aufweisen. Die WO 2022/002932 A1 beschreibt eine Gasdiffusionslage für eine Brennstoffzelle, wobei sich mindestens eine physikalische Eigenschaft, ausgewählt unter Hydrophobizität und Permeabilität, in mindestens einer Richtung entlang der größten flächigen Ausdehnung ändert. Konkret ist beschrieben, z.B. die Hydrophobizität über den Gehalt eines hydrophobierenden Materials (wie PTFE) und die Permeabilität durch die Porosität der Gasdiffusionslage zu steuern. Bei einer aufgebrachten mikroporösen Schicht kann ihre Dicke beeinflusst werden, was unter anderem zu einer sich ändernden lokalen Eindringtiefe in die Trägerschicht führt. Die Offenbarung dieser Anmeldung ist wenig konkret und es fehlt sowohl an Angaben zur Ausführung der beschriebenen Konzepte, als auch einem nacharbeitbaren Ausführungsbeispiel sowie anwendungstechnischen Daten.

Die EP 3957789 A1 beschreibt eine Gasdiffusionslage, die trotz ihrer geringen Dichte eine hohe Wärmeleitfähigkeit aufweist und eine gute Handhabbarkeit und Zellleistung aufweist. Die GDL umfasst einen Kohlefaserfilz, der Kohlenstofffasern mit einem durchschnittlichen Faserdurchmesser von 5 bis 20 $\mu$m enthält, wobei mindestens ein Teil der Kohlenstofffasern, die den Kohlenstofffaserfilz bilden, einen flachen Teil aufweist, bei dem in einer ebenen Ansicht der Oberfläche des Kohlenstofffaserfilzes ein Maximalwert des Faserdurchmessers beobachtet wird, der 10 bis 50 % größer ist als der durchschnittliche Faserdurchmesser, und die Häufigkeit der flachen Teile an der Oberfläche des Kohlenstofffaserfilzes 50 bis 200/mm$^2$ beträgt.

Die WO 2020/165075 A1 beschreibt ein Verfahren zur Herstellung einer Gasdiffusionsschicht, das die folgenden Schritte umfasst:

a) Herstellung einer Träger-Bindemittel-Paste, die ein Lösungsmittel, ein fluoriertes Bindemittel und leitfähige Trägerteilchen enthält,
b) Herstellung einer adhäsiven Zusammensetzung, umfassend

- ein Lösungsmittel,
- ein fluoriertes Bindemittel und
- im Wesentlichen keine oder gleich oder weniger als 15 Gew.-% leitfähige Trägerteilchen, bezogen auf das Gesamtgewicht des fluorierten Bindemittels und aller leitfähigen Trägerteilchen; und

c) Kombinieren einer Schicht des Trägermaterials, einer Schicht der adhäsiven Zusammensetzung und einer Schicht der Träger-Bindemittel-Paste, wobei die Schicht der adhäsiven Zusammensetzung zwischen der Schicht des Trägermaterials und der Schicht der Träger-Bindemittel-Paste aufgebracht wird, und
Pressen der Kombination aus Trägermaterial, adhäsiver Zusammensetzung und Träger-Bindemittel-Paste bei einem Druck von mindestens 15 Kilopascal (0,15 bar) und/oder Erhitzen der Kombination aus Trägermaterial, adhäsiver Zusammensetzung und Träger-Bindemittel-Paste auf eine Temperatur von mindestens 300°C.

Diesem Dokument liegt die Aufgabe zugrunde, mechanisch stabile Gasdiffusionselektroden bereit zu stellen, bei denen die Träger-Bindemittel-Schicht, die vorzugsweise als mikroporöse Schicht ausgebildet ist, fest mit dem Trägermaterial verbunden ist. Dies wird durch die zusätzliche adhäsive Schicht erzielt, die frei von elektrisch leitfähigen Teilchen ist oder diese nur in geringer Menge enthält. Das Verpressen der Schichten erfolgt bei einem Druck von maximal 2,5 MPa und einer Temperatur von wenigstens 300°C, wobei lange Behandlungszeiten von wenigstens 15 Minuten und bevorzugt 1 bis 4 Stunden eingesetzt werden. Durch die weitere Binderschicht zwischen Substrat und MPL erhöht sich die Anzahl der benötigten Prozessschritte, außerdem wird durch die lange Verpressungszeit die industrielle Anwendbarkeit sehr erschwert.

Die JP 2007242378 A beschreibt eine Gasdiffusionsschicht die aus porösen gesinterten Kohlenstoffteilchen und wasserabweisenden Teilchen besteht. Zu ihrer Herstellung werden Kohlenstoffpartikel und wasserabweisende Partikel in Gegenwart eines nichtionischen Tensids in Wasser dispergiert, unter Phaseninversion aufkonzentriert und gesintert. Dieser gesinterte Film wird abgezogen, wieder pulverisiert und die resultierenden gesinterten groben Partikel in einer Form heiß zu einer GDL gepresst. Damit kann gewünschtenfalls auf die Verwendung eines faserbasierten Substrats in der finalen GDL verzichtet werden, so dass diese nur noch aus groben kohlenstoffbasierten Partikeln und wasserabweisenden Partikeln besteht. Eine solche Vorgehensweise führt voraussichtlich zu Nachteilen in der weiteren Verarbeitung beim Zuschnitt und der Herstellung der Zellstapel sowie der Stabilität in der Zelle.

Die EP 3276718 A1 beschreibt ein poröses Kohlenstoffelektrodensubstrat, das beim Einsatz in einer Brennstoffzelle kaum Kurzschlüsse verursacht. Dabei werden Kohlenstofffasern, die aus der Substratoberfläche vorstehen oder zum Vorstehen gebracht werden, wenn das Kohlenstoffelektrodensubstrat unter Druck gesetzt wird, sowie kurze Kohlenstofffasern, die unzureichend an der Substratoberfläche gebunden sind, ausreichend entfernt. Zur Herstellung werden kurze Carbonfasern und ein Binderharz eingesetzt, das einen Kohlenstoffgehalt von wenigstens 35 Gew.-% enthält und das unter Erhitzen carbonisiert. Das resultierende GDL Substrat basiert somit auf einem vollständig harzgetränkten Fasermaterial.

Die EP 3396753 A1 beschreibt eine Gasdiffusionselektrode, die weniger anfällig für das Auftreten eines Kurzschlussstroms ist, wenn sie in einer Brennstoffzelle verwendet wird. Dabei umfasst das GDL-Substrat Kohlenstoff-Kurzfasern die mit einem Kohlenstoff-Harz gebunden sind, wobei die Gasdiffusionselektrode einen mehrschichtigen Aufbau mit vorzugsweise wenigstens zwei mikroporösen Schichten aufweist, die sich in ihrer Schichtfüllrate unterscheiden, und wobei die mikroporöse(n) Schicht(en) ausreichende Dicken unter Druckbelastung aufweisen müssen. Um die Kurzschlusswahrscheinlichkeit zu reduzieren sind eine Vielzahl von Maßnahmen beschrieben, z.B. Druckbehandlung des Precursor-Substrats vor der Carbonisierung des Binderharzes und Erhöhung der Temperatur im Carbonisierungsschritt. Nur für den Fall, dass eine weitere Reduktion erwünscht ist, ist eine Nachbehandlung durch Kalandrieren, gefolgt von Blasen mit Luft und Saugen, beschrieben. Nachteilig an diesem Verfahren ist, dass eine Druckbehandlung vor der Carbonisierung einen zusätzlichen Aufwand erfordert, Harzbinder im Fasersubstrat oftmals unerwünscht sind und auch der Einsatz von zwei oder mehr MPL-Schichten den Aufwand erhöht. Ein mehrschichtiger Aufbau erhöht zudem immer die Gefahr der Delaminierung bei Wicklung, Verzug, Streckung oder unter Druckeinwirkung.

Die US 2019/0344405 beschreibt eine Klebevorrichtung zum Verkleben einer Gasdiffusionsschicht innerhalb einer Brennstoffzelle. Diese Vorrichtung verfügt über eine Saugvorrichtung und soll flauschige bzw. lockere Fasern einer Gasdiffusionsschicht binden oder beseitigen. Der Einsatz eines zusätzlichen Geräts erhöht die Herstellungskosten. Zudem ist fraglich, dass mit dem Einsatz dieser Vorrichtung das Problem der internen Kurzschlüsse gelöst wird, die durch herausstehende Fasern der auf der Membran aufliegenden GDLs hervorgerufen werden können.

Der Erfindung liegt die Aufgabe zugrunde, die zuvor beschriebenen Nachteile zu vermeiden oder zumindest zu vermindern.

Überraschenderweise wurde nun gefunden, dass Gasdiffusionslagen mit einem guten Eigenschaftsprofil und speziell mit sehr guten Oberflächeneigenschaften und mit einem signifikant verbesserten Setzverhalten erzielt werden können,

wenn man die Gasdiffusionslage einer Nachbehandlung bei erhöhtem Druck und erhöhter Temperatur unterzieht. Heiß komprimierte Gasdiffusionslagen zeichnen sich insbesondere durch eine erheblich glattere Oberfläche auf der/den mit einer mikroporösen Lage beschichteten Seite(n) aus. Daraus resultiert eine erheblich geringere Kurzschluss-Wahrscheinlichkeit durch herausstehende Fasern und an der Oberfläche der MPL liegende Verunreinigungen, durch andere Ursachen einer rauen Oberfläche oder andere Effekte, die beim Betrieb der Brennstoffzelle auftreten und zu einer Penetration der Membran führen können. Weiterhin kann durch die Nachbehandlung bei erhöhtem Druck und erhöhter Temperatur der plastische Verformungsanteil der GDL deutlich reduziert werden. Desweiteren wurde überraschenderweise gefunden, dass durch die Nachbehandlung auch die Transporteigenschaften der GDL gesteuert werden können. Somit lassen sich Eigenschaften, wie die Gaspermeabilität und die Trockendiffusionslänge, unabhängig von der stofflichen Zusammensetzung der Gasdiffusionslage steuern.

ZUSAMMENFASSUNG DER ERFINDUNG

Ein erster Gegenstand der Erfindung ist ein Verfahren zur Herstellung einer Gasdiffusionslage für eine Brennstoffzelle, umfassend

A) ein flächiges elektrisch leitfähiges Fasermaterial und

B) eine mikroporöse Lage auf wenigstens einer der Flächen des Fasermaterials, umfassend leitfähige Partikel in einer Matrix aus einem polymeren Bindemittel,

bei dem man

i) ein flächiges elektrisch leitfähigen Fasermaterial A) bereitstellt,

ii) das in Schritt i) bereitgestellte Fasermaterial mit einem Precursor zur Ausbildung einer mikroporösen Lage beschichtet,

iii) das in Schritt ii) erhaltene beschichtete Fasermaterial einer Nachbehandlung bei erhöhtem Druck und gegebenenfalls erhöhter Temperatur unterzieht.

Vorzugsweise wird durch das erfindungsgemäße Verfahren, speziell die Nachbehandlung in Schritt iii), eine Gasdiffusionslage mit einer verringerten plastischen Verformbarkeit gegenüber einer nicht nachbehandelten Gasdiffusionslage erzielt. Insbesondere wird eine Gasdiffusionslage mit einem verringerten Compression Set-Wert gegenüber einer nicht nachbehandelten Gasdiffusionslage erzielt.

Vorzugsweise wird durch das erfindungsgemäße Verfahren, speziell die Nachbehandlung in Schritt iii), eine Gasdiffusionslage mit einer glatteren Oberfläche der wenigstens einen mikroporösen Lage erzielt.

Speziell erfolgt die Nachbehandlung in Schritt iii) bei erhöhtem Druck von wenigstens 0,5 MPa und erhöhter Temperatur von wenigstens 100°C.

Eine spezielle Ausführung ist ein Verfahren zur Erzielung einer Gasdiffusionslage mit einer, bevorzugt zwei, besonders bevorzugt drei, insbesondere vier der folgenden Eigenschaften:

- einen Compression Set-Wert bei 1,0 MPa von höchstens 5 $\mu$m, bestimmt an einer GDL mit einem Flächengewicht von 95 bis 100 g/m$^2$ und einer MPL-Beladung von 15 bis 22 g/m$^2$ an einer ringförmigen Probe mit einem inneren Durchmesser von 45 mm und einem äußeren Durchmesser von 56 mm, wobei die Probe drei Belastungszyklen von 0,025 MPa auf 1,0 MPa unterzogen wird und sich der Compression Set-Wert aus der Differenz der bei 1,0 MPa gemessenen Dicke im ersten Belastungszyklus und im dritten Belastungszyklus ergibt,
- einer Verringerung des Mittenrauwert $R_a$, bestimmt nach DIN EN ISO 4288:1998-04 mit dem Tastschnittverfahren, gegenüber einer nicht nachbehandelten Gasdiffusionslage von wenigstens 10%,
- einer Verringerung der Rautiefe $R_z$, bestimmt nach DIN EN ISO 4288:1998-04 mit dem Tastschnittverfahren, gegenüber einer nicht nachbehandelten Gasdiffusionslage von wenigstens 10%,
- einer Shorting Number von höchstens 25 %, bestimmt mittels Durchstoßmessung an einer GDL von 297 x 420 mm Grundfläche mit einem Flächengewicht von 95 g/m$^2$ und einer MPL-Beladung von 15 g/m$^2$.

Ein weiterer Gegenstand der Erfindung ist eine Gasdiffusionslage, erhältlich durch ein Verfahren, wie zuvor und im Folgenden beschrieben.

Ein weiterer Gegenstand der Erfindung ist eine Gasdiffusionslage für eine Brennstoffzelle, umfassend

A) ein flächiges elektrisch leitfähiges Fasermaterial und
B) eine mikroporöse Lage auf wenigstens einer der Flächen des Fasermaterials,

wobei die Gasdiffusionslage wenigstens eine der folgenden Eigenschaften aufweist

- einen Compression Set-Wert bei 1,0 MPa von höchstens 5 $\mu$m, bestimmt an einer GDL mit einem Flächengewicht von 95 bis 100 g/m$^2$ und einer MPL-Beladung von 15 bis 22 g/m$^2$ an einer ringförmigen Probe mit einem inneren Durchmesser von 45 mm und einem äußeren Durchmesser von 56 mm, wobei die Probe drei Belastungszyklen von 0,025 MPa auf 1,0 MPa unterzogen wird und sich der Compression Set-Wert aus der Differenz der bei 1,0 MPa gemessenen Dicke im ersten Belastungszyklus und im dritten Belastungszyklus ergibt,
- einer Verringerung des Mittenrauwert $R_a$, bestimmt nach DIN EN ISO 4288:1998-04 mit dem Tastschnittverfahren, gegenüber einer nicht nachbehandelten Gasdiffusionslage von wenigstens 10%,

- einer Verringerung der Rautiefe $R_z$, bestimmt nach DIN EN ISO 4288:1998-04 mit dem Tastschnittverfahren, gegenüber einer nicht nachbehandelten Gasdiffusionslage von wenigstens 10%,
- einer Shorting Number von höchstens 25 %, bestimmt mittels Durchstoßmessung an einer GDL von 297 x 420 mm Grundfläche mit einem Flächengewicht von 95 g/m$^2$ und einer MPL-Beladung von 15 g/m$^2$.

Ein weiterer Gegenstand der Erfindung ist eine Brennstoffzelle, die wenigstens eine Gasdiffusionslage, wie zuvor und im Folgenden definiert, umfasst.

Ein weiterer Gegenstand der Erfindung ist die Verwendung einer Gasdiffusionslage, wie zuvor und im Folgenden definiert, oder erhältlich durch ein Verfahren, wie zuvor und im Folgenden definiert, in einer Protonenaustauschmembran-Brennstoffzelle.

BESCHREIBUNG DER ERFINDUNG

Die erfindungsgemäßen und nach dem erfindungsgemäßen Verfahren erhaltenen Gasdiffusionslagen haben folgende Vorteile:

- Die erhaltenen Gasdiffusionslagen verfügen über sehr guten Oberflächeneigenschaften. Bei erhöhtem Druck und vorzugsweise erhöhter Temperatur nachbehandelte Gasdiffusionslagen zeichnen sich insbesondere durch eine erheblich glattere Oberfläche auf der/den mit einer mikroporösen Lage beschichteten Seite(n) aus.
- Die Gasdiffusionslagen verfügen über eine erheblich geringere Kurzschluss-Wahrscheinlichkeit infolge einer Penetration der Protonenaustauschmembran, wie sie speziell durch herausstehende Fasern, an der Oberfläche der MPL liegende Verunreinigungen oder andere Ursachen einer rauen Oberfläche auftreten können.
- Die Gasdiffusionslagen verfügen über ein signifikant verbessertes Setzverhalten. Durch die erfindungsgemäße Nachbehandlung bei erhöhtem Druck und vorzugsweise erhöhter Temperatur kann der plastische Verformungsanteil der GDL deutlich reduziert werden.
- Konstruktive Maßnahmen zur Anpassung der Brennstoffzellenstapel an die mit dem Setzen der GDL verbundenen Folgen, wie ein verringerter Kompressionsdruck, erhöhte Materialwiderstände der verbauten Komponenten und ein Spannungsverlust können verringert oder es kann ganz auf diese verzichtet werden.
- Überraschenderweise wurde gefunden, dass durch die erfindungsgemäße Nachbehandlung auch die Transporteigenschaften der Gasdiffusionslage gezielt beeinflusst werden können. Somit lassen sich Eigenschaften, wie die Gaspermeabilität und die Trockendiffusionslänge, unabhängig von der stofflichen Zusammensetzung der Gasdiffusionslage steuern.
- Die erfindungsgemäßen Gasdiffusionslagen lassen sich einfach und kostengünstig herstellen.

Das erfindungsgemäße Verfahren umfasst die folgenden Schritte:

i) Bereitstellen eines flächigen elektrisch leitfähigen Fasermaterials A),
ii) Beschichten des in Schritt i) bereitgestellten Fasermaterials mit einem Precursor zur Ausbildung einer mikroporösen Lage B), wobei die Zusammensetzung des Precursors zur Erzeugung eines Gradienten variiert wird,
iii) Nachbehandeln des in Schritt ii) erhaltenen beschichteten Fasermaterials bei erhöhtem Druck und gegebenenfalls erhöhter Temperatur.

Bezüglich der Fasermaterialien A) und der Precursoren und Bedingungen zur Ausbildung einer mikroporösen Lage B) wird auf die Ausführungen weiter unten in vollem Umfang Bezug genommen.

iii) Nachbehandlung bei erhöhtem Druck und erhöhter Temperatur

In einer speziellen Ausführung erfolgt die die Behandlung in Schritt iii) bei erhöhtem Druck von wenigstens 0,5 MPa und erhöhter Temperatur von Wenigstens 100°C.

Bevorzugt erfolgt die Behandlung in Schritt iii) bei einem Druck im Bereich von 0,5 bis 10,0 MPa (5 bis 100 bar), besonders bevorzugt von 1,5 bis 8,0 MPa.

Bevorzugt erfolgt die Behandlung in Schritt iii) bei einer Temperatur im Bereich von 100 bis 350°C, besonders bevorzugt von 120 bis 330°C, insbesondere von 150 bis 320°C.

Bevorzugt erfolgt die Behandlung in Schritt iii) in einer Presse über einen Zeitraum von 5 Sekunden bis 5 Minuten, bevorzugt von 10 Sekunden bis 2 Minuten.

Bevorzugt erfolgt die Behandlung in Schritt iii) in einem Kalander über einen Zeitraum von größer 0 Sekunden bis 10 Sekunden, bevorzugt von 0,1 Sekunden bis 5 Sekunden.

Zur Nachbehandlung in Schritt iii) können übliche Vorrichtungen, wie Ein- oder Mehretagenpressen, Endlos-Bandpressen oder Kalander eingesetzt werden. In einer speziellen Ausführung wird zur Nachbehandlung in Schritt iii) wenigstens eine Doppelbandpresse eingesetzt In einer weiteren spezielle Ausführung wird zur Nachbehandlung in Schritt iii) wenigstens ein Kalander eingesetzt.

Einetagenpressen oder Mehretagenpresse eignen sich speziell zur diskontinuierlichen Nachbehandlung von abschnittsförmigen Materialien. Doppelbandpressen eignen sich sowohl zur Behandlung endloser bahnförmiger Materialien, als auch von abschnittsförmige Materialien (Plattenmaterial). Doppelbandpressen besitzen zwei endlos umlaufende Preßbänder, zwischen denen die GDL-Bahn unter Einwirkung von Druck und gegebenenfalls auch Wärme bei gleichzeitigem Transport in Vorlaufrichtung nachbehandelt wird. Die Bänder sind parallel zueinander ausgerichtet und zwischen dem oberen und dem unteren Band befindet sich ein Spalt, der zur Anpassung an die Dicke des GDL-Materials und zur Einstellung der gewünschten Eigenschaften geöffnet und geschlossen werden kann.

In einer bevorzugten Ausführungsform erfolgt die Behandlung in Schritt iii) in einer Doppelbandpresse. Speziell erfolgt die Behandlung in Schritt iii) in einer Doppelbandpresse bei einem Druck im Bereich von 1 bis 8 MPa (10 bis 80 bar) und bei einer Temperatur im Bereich von 200 bis 350°C.

Grundsätzlich können in Schritt iii) des erfindungsgemäßen Verfahrens bekannte und handelsübliche Kalander eingesetzt werden. So ist es möglich, Kalander mit 2, 3, 4 oder mehr als 4 Kalanderwalzen einzusetzen. In der einfachsten bevorzugten Ausführungsform ist der im erfindungsgemäßen Verfahren verwendete Kalander ein 2-Walzen-Kalander. Die Gasdiffusionslage kann einmal oder wiederholt, z. B. 1, 2, 3, 4, 5 oder mehr als 5 Mal, durch den Kalander geführt werden. Die Kalanderwalzen können in einer Geometrie angeordnet werden, die sich für das Kalandrieren der Gasdiffusionslagen eignet. Ein Zweiwalzenkalander kann eine vertikale, geneigte oder horizontale Anordnung der Walzen aufweisen. Ein Dreiwalzenkalander kann eine vertikale Anordnung, eine versetzt angeordnete Oberwalze oder versetzt angeordnete Unterwalze aufweisen. Ein Vierwalzenkalander kann eine L-Anordnung, eine umgekehrte L-Anordnung, eine S-Anordnung, eine Z-Anordnung oder eine andere Anordnung der Walzen aufweisen.

Vorzugsweise erfolgt die Behandlung in Schritt iii) in einem Kalander bei einem Liniendruck im Bereich von 5 bis 500 N/mm, vorzugsweise 10 bis 100 N/mm.

Vorzugsweise wird das Kalandrieren in Schritt iii) mit einer Geschwindigkeit von 0,05 m/min bis 30 m/min durchgeführt.

In einer bevorzugten Ausführungsform erfolgt die Behandlung in Schritt iii) in einem Kalander. Speziell erfolgt die Behandlung in Schritt iii) in einem Kalander bei einer Walzentemperatur im Bereich von 130 bis 220°C bei einem Liniendruck im Bereich von 8 bis 80 N/mm und einer Bahngeschwindigkeit von 1 bis 10 m/min.

Flächiges elektrisch leitfähiges Fasermaterial A) und Gasdiffusionslage (GDL)

Im Rahmen der Erfindung bezeichnet ein Vlies allgemein ein Flächengebilde, das mehrheitlich aus vereinzelten Fasern besteht, deren Zusammenhalt im Wesentlichen nur durch die ihnen eigene Haftung gegeben ist. Die Umwandlung eines Vlieses in einen Vliesstoff durch das Erzeugen eines festeren Verbundes zwischen den Fasern als er im Vlies vorliegt, erfolgt durch Verfahren der Vliesverfestigung, die meist in mechanische, chemische und thermische Verfahren unterteilt werden. Vliese, Vliesstoffe und Verfahren zu ihrer Herstellung sind in H. Fuchs, W. Albrecht, Vliesstoffe, 2. Auflage, Wiley-VCH, Weinheim, Germany beschrieben.

Bei dem erfindungsgemäß eingesetzten flächigen elektrisch leitfähigen Material A) und der Gasdiffusionslage handelt es sich um ein flächenförmiges Gebilde, das über eine im Wesentlichen zweidimensionale, ebene Ausdehnung und eine demgegenüber geringere Dicke verfügt. Die erfindungsgemäße Gasdiffusionslage weist eine Grundfläche auf, die in der Regel im Wesentlichen der Grundfläche der angrenzenden Membran mit den Katalysatorschichten und der Grundfläche der angrenzenden Strömungsverteilerplatte entspricht. Die Form der Grundfläche der Gasdiffusionslage kann beispielsweise polygonal (n-eckig mit n ≥3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig. Zur Beschreibung der GDL kann ein orthogonales Koordinatensystem verwendet, wobei die Grundfläche der GDL in der von der x-Achse und der y-Achse aufgespannten Ebene (auch als x,y-Ebene bezeichnet) liegt. Die dazu orthogonale z-Achse dient zur Beschreibung der Materialdicke. Gemäß der für Faserverbundmaterialien üblichen Beschreibung werden die x-Achse auch als Rollenrichtung (machine direction, MD) und die y-Achse als Gegenrollenrichtung (cross machine direction, CMD) beschrieben. In Richtung der z-Achse erfolgt im Wesentlichen der Stofftransport zwischen Strömungsverteilerplatte und Membran.

Die Gasdiffusionslage umfasst als Komponente A) wenigstens ein elektrisch leitfähiges flächiges Fasermaterial. Bevorzugt umfasst die Komponente A) ein Fasermaterial, das ausgewählt ist unter Vliesen, Papieren, Geweben und Kombinationen davon. Geeignete Substratmaterialen sind Fasermaterialen, die selbst leitfähig sind oder durch Zugabe leitfähiger Additive, wie Kohlenstoff- oder Metallpartikel, leitfähig gemacht werden. Als Substratmaterial eignen sich prinzipiell Kohlenstofffasern, Glasfasern, Fasern organischer Polymere, wie Polypropylen, Polyester, Polyphenylensulfid, Polyetherketonen, und Mischungen davon. Die in dem Fasermaterial A) enthaltenen Fasern umfassen oder bestehen vorzugsweise aus Kohlenstofffasern (Kohlefasern, Carbonfasern). Solche Fasermaterialien erfüllen besonders vorteilhaft die Anforderung an die GDL nach Gasdiffusivität, Flüssigwasserpermeabilität, elektrischer und thermischer Leitfähigkeit. Das Fasermaterial A) ist vorzugsweise ausgewählt unter Kohlefaser-Geweben, Kohlefaser-Papieren und Kohlefaser-Vliesstoffen. In einer bevorzugten Ausführungsform umfasst das Fasermaterial A) wenigstens einen Kohlefaser-Vliesstoff oder besteht das Fasermaterial A) aus einem Kohlefaser-Vliesstoff.

Die Herstellung der Kohlenstofffasern kann in üblicher Weise erfolgen, wobei als Ausgangsmaterial vorzugsweise Polyacrylnitril-Fasern (PAN-Fasern) eingesetzt werden. PAN-Fasern werden hergestellt durch radikalische Polymerisation einer Monomerzusammensetzung, die vorzugsweise wenigstens 90 Gew.-%, bezogen auf das Gesamtgewicht der zur Polymerisation eingesetzten Monomere, Acrylnitril enthält. Die erhaltene Polymerlösung wird, z. B. durch Nassspinnen und Koagulation, zu Filamenten versponnen und zu Tauen zusammengefasst. Bevor dieser PAN-Precursor unter hohen Temperaturen zu Kohlenstofffasern umgewandelt wird, wird er in der Regel in einer sauerstoffhaltigen Atmosphäre bei erhöhten Temperaturen von etwa 180 bis 300 °C einer oxidativen Cyclisierung (auch kurz als Oxidation bezeichnet) unterzogen. Durch die dabei resultierende chemische Vernetzung wird die Formstabilität der Fasern verbessert. Anschließend erfolgt bei Temperaturen von wenigstens 1200 °C die eigentliche Pyrolyse zu Kohlenstofffasern. Für diese Pyrolyse können in Abhängigkeit von der Form des angestrebten Fasermaterials entweder die Ausgangsfasern oder bereits ein flächiges Fasermaterial eingesetzt werden. In Abhängigkeit von der Temperatur bei der Pyrolyse unterscheidet man zwischen Carbonisierung und Graphitisierung. Carbonisierung bezeichnet eine Behandlung bei etwa 1200 bis 1500 °C unter Inertgasatmosphäre, die zur Abspaltung flüchtiger Produkte führt. Durch Graphitisierung, d. h. Erhitzen auf etwa 2000 bis 3000 °C unter Inertgas, erhält man so genannte Hochmodul- oder Graphitfasern. Diese Fasern verfügen über eine hohe Reinheit, sind leicht, hoch fest und sehr gut leitfähig für Elektrizität und Wärme.

Das Fasermaterial A) ist vorzugsweise ausgewählt unter Kohlefaser-Geweben, Kohlefaser-Papieren und Kohlefaser-Vliesstoffen.

Bei Kohlefasergeweben wird das flächige Fasermaterial durch das Verkreuzen von zwei Fadensystemen, Kette (Kettfäden) und Schuss (Schussfäden), hergestellt. Wie bei Textilien werden Faserbündel flexibel, aber unlösbar miteinander verbunden. Zur Herstellung von Kohlefasergeweben werden vorzugsweise oxidierte, aber noch nicht karbonisierte oder graphitierte PAN-Fasern eingesetzt. Die Karbonisierung oder Graphitierung, um dem flächigen Fasermaterial elektrische Leitfähigkeit zu verleihen, erfolgt nach dem Weben.

Wie eingangs beschrieben, werden zur Herstellung von Kohlefaser-Papieren in der Regel oxidierte PAN-Fasern eingesetzt. Diese werden in an sich bekannter Weise zu Faserbruchstücken zerkleinert, aufgeschlämmt und analog zur Papierherstellung durch Sieben (Bütten) ein Fasergelege hergestellt und getrocknet. In einer bevorzugten Ausführung wird in das Papier zusätzlich wenigstens ein Bindemittel eingebracht. Geeignete Bindemittel sind z. B. Phenol-, Furan-, Polyimidharze, etc. Zum Einbringen des Bindemittels kann das Papier mit diesem imprägniert und das Bindemittel gegebenenfalls anschließend gehärtet werden. Nach dem Imprägnieren und Härten wird das Kohlefaser-Papier nochmals einer Karbonisierung/Graphitisierung unterzogen, um auch das Bindemittel in Verbindungen mit verbesserter elektrischer Leitfähigkeit zu überführen. In einer weiteren geeigneten Ausführung wird zur Bereitstellung des Fasermaterials A) ein gefülltes Kohlefaser-Papier eingesetzt. Die Herstellung erfolgt zunächst wie zuvor beschrieben, jedoch wird anstelle des Einbringens eines Bindemittels und der Karbonisierung/Graphitisierung ein Füllstoff aus einem Kohlenstoffmaterial in einem polymeren Binder in das noch feuchte Papier eingebracht. Speziell wird dazu ein Kohlenstoff-PTFE-Füllstoff eingesetzt. Durch diese Füllung wird die thermische und elektrische Leitfähigkeit so erhöht, dass eine Karbonisierung/Graphitisierung entfallen kann.

Zur Herstellung von Kohlefaser-Vliesstoffen können nicht oxidierte oder oxidierte PAN-Fasern eingesetzt werden. Diese können in einem ersten Schritt trocken zu einem Flor gelegt (kardiert) und anschließend zu einem Vliesstoff verfestigt werden. Dies kann beispielsweise durch Wasserstrahlverfilzung (hydro-entangling) erfolgen, wobei die Karbonfasern orientiert, verschränkt und somit mechanisch stabilisiert werden. Gegebenenfalls kann die Dicke des verfestigten Vliesstoffs auf einen gewünschten Wert kalibriert werden. Vliesstoffe auf Basis nicht oxidierter PAN-Fasern werden nach dem Vlieslegen und Verfestigen zunächst der Oxidation bei erhöhter Temperatur und unter Sauerstoffatmosphäre und anschließend der Karbonisierung/Graphitisierung unter Inertgasatmosphäre unterzogen. Vliesstoffe auf Basis oxidierter PAN-Fasern werden nach dem Vlieslegen und Verfestigen nur einer Karbonisierung/Graphitisierung unterzogen. Optional kann in das Vlies zusätzlich wenigstens ein Bindemittel eingebracht und dieses gegebenenfalls anschließend gehärtet werden. Geeignete Bindemittel sind die für Kohlefaser-Papiere genannten, speziell Phenolharze. Das Einbringen des Bindemittels kann sich z. B. an die Karbonisierung/Graphitisierung anschließen und das erhaltene imprägnierte Vlies abschließend nochmals karbonisiert/graphitisiert werden.

In einer speziellen Ausführungsform umfasst das flächige elektrisch leitfähige Fasermaterial A) wenigstens einen Kohlefaser-Vliesstoff. Diese sind unter Anderem vorteilhaft, da sie kompressionselastisch sind und einfach großtechnisch, z. B. in einem Rolle-zu-Rolle-Verfahren, hergestellt werden können.

Bei dem Fasermaterial A) handelt es sich in der Regel um einen Faserverbundwerkstoff, umfassend:

a1) Kohlenstofffasern,

a2) gegebenenfalls wenigstens ein polymeres Bindemittel und/oder ein Pyrolyseprodukt davon,

a3) gegebenenfalls wenigstens ein weiteres, von a2) verschiedenes Additiv.

Die in der Gasdiffusionslage enthaltenen Fasermaterialien A) können übliche Additive a3) enthalten. Diese sind vorzugsweise ausgewählt unter Hydrophobisierungsmitteln, leitfähigkeitsverbessernden Additiven, oberflächenaktiven Substanzen und Mischungen davon.

Um die Transportvorgänge durch die GDL und an den Grenzflächen zu verbessern, kann es vorteilhaft sein, die Hydrophobizität des Fasermaterials A) zu erhöhen. Geeignete Hydrophobisierungsmittel sind fluorhaltige Polymere, wie Polytetrafluorethylen (PTFE) und Tetrafluorethylen-Hexafluorpropylen-Copolymere (FEP). Bevorzugt wird als Hydrophobisierungsmittel PTFE eingesetzt. Das Fasermaterial kann durch übliche Imprägnierungsverfahren mit dem Hydrophobisierungsmittel ausgerüstet werden. Dazu kann eine PTFE-Dispersion in einem Tauchbad appliziert, das Lösungsmittel verdampft und das behandelte Fasermaterial bei erhöhten Temperaturen von in der Regel wenigstens 300 °C gesintert werden.

Bevorzugt weist das Fasermaterial A) einen Gehalt an Hydrophobisierungsmitteln von 3 bis 40 Gew.-%, bezogen auf das Gesamtgewicht des Fasermaterials A), auf. In einer speziellen Ausführungsform weist das Fasermaterial einen Gehalt an PTFE von 3 bis 40 Gew.-%, bezogen auf das Gesamtgewicht des Fasermaterials A), auf.

Zur Verbesserung der elektrischen und der thermischen Leitfähigkeit kann das Fasermaterial A) mit wenigstens einem leitfähigkeitsverbessernden Additiv ausgerüstet werden. Geeignete leitfähigkeitsverbessernde Additive sind z. B. Metallpartikel, Kohlenstoffpartikel, etc. Bevorzugt ist das leitfähigkeitsverbessernde Additiv ausgewählt unter Ruß, Graphit, Graphen, Kohlenstoffnanoröhren (CNT), Kohlenstoffnanofasern und Mischungen davon. Die Ausrüstung des Fasermaterials A) mit wenigstens einem leitfähigkeitsverbessernden Additiv kann beispielsweise gemeinsam mit dem Hydrophobisierungsmittel, speziell einer PTFE-Dispersion, erfolgen. Vielfach verfügt das Fasermaterial A) durch die eingesetzten Kohlenstofffasern auch ohne leitfähigkeitsverbessernde Additive über eine gute elektrische und thermische Leitfähigkeit.

Bevorzugt weist das Fasermaterial A) einen Gehalt an leitfähigkeitsverbessernden Additiven von 0 bis 40 Gew.-%, bezogen auf das Gesamtgewicht des Fasermaterials A), auf. Wenn das Fasermaterial A) ein leitfähigkeitsverbesserndes Additiv enthält, dann vorzugsweise in einer Menge von 0,1 bis 40 Gew.-%, besonders bevorzugt von 0,5 bis 30 Gew.-%, bezogen auf das Gesamtgewicht des Fasermaterials A), auf.

Das Fasermaterial A) weist vorzugsweise eine Dicke im Bereich von 50 bis 750 $\mu$m, besonders bevorzugt von 100 bis 500 $\mu$m auf. Diese Dicke bezieht sich auf den unkomprimierten Zustand des Fasermaterials A), d. h. vor der Nachbehandlung in Schritt iii) und vor dem Einbau der GDL in eine Brennstoffzelle.

Das Fasermaterial A) weist vorzugsweise eine Porosität im Bereich von 10 bis 90 %, besonders bevorzugt von 20 bis 85 %, auf, gemessen mittels Quecksilberporosimetrie gemäß DIN ISO 15901-1:2019-03.

Der mittlere Porendurchmesser des Fasermaterials A) liegt vorzugsweise in einem Bereich von 5 bis 60 $\mu$m, besonders bevorzugt von 8 bis 50 $\mu$m, insbesondere von 10 bis 40 $\mu$m. Die Bestimmung des mittleren Porendurchmessers kann durch Quecksilber-Porosimetrie, gemessen nach DIN ISO 15901-1:2019-03, erfolgen.

Mikroporöse Lage B)

Die erfindungsgemäße Gasdiffusionslage besteht aus einem zwei- oder mehrlagigen Schichtverbund auf Basis eines flächigen, elektrisch leitfähigen Fasermaterials A) und wenigstens einer mikroporösen Lage (MPL) B) auf wenigstens einer der Flächen des Fasermaterials A).

Erfindungsgemäß umfasst die mikroporöse Lage B) leitfähige Partikel in einer Matrix aus einem polymeren Bindemittel. Die leitfähigen Partikel sind vorzugsweise ausgewählt unter leitfähigen Kohlenstoffpartikeln, insbesondere Ruß, Graphit, Graphen, Kohlenstoffnanoröhren (CNT), Kohlenstoffnanofasern und Mischungen davon. Bevorzugt wird Ruß, Graphit oder eine Mischung davon eingesetzt.

Insbesondere enthält das polymere Bindemittel wenigstens ein fluorhaltiges Polymer. Das fluorhaltiges Polymer) ist vorzugsweise ausgewählt unter Polytetrafluorethylenen, Tetrafluorethylen-Hexafluorpropylen-Copolymeren, Perfluoralkoxy-Polymeren und Mischungen davon. Bevorzugt wird ein Polytetrafluorethylen (PTFE) eingesetzt.

Vorzugsweise wird zur Herstellung der mikroporösen Lage B) das polymere Bindemittel in einer Gewichtsmenge von 0,5 bis 50 Gew.-%, besonders bevorzugt von 1,0 bis 40 Gew.-%, insbesondere 10 bis 25 Gew.-%, bezogen auf das Gesamtgewicht aus polymeren Bindemitteln und leitfähigen Partikeln eingesetzt.

Im Gegensatz zum makroporösen Fasermaterial A) ist die MPL B) mikroporös mit Porendurchmessern, die in der Regel deutlich unter einem Mikrometer liegen, bevorzugt von höchstens 900 nm, besonders bevorzugt von höchstens 500 nm, insbesondere von höchstens 300 nm. Der mittlere Porendurchmesser der MPL B) liegt vorzugsweise in einem Bereich von 5 bis 200 nm, besonders bevorzugt von 10 bis 100 nm.

Die Bestimmung Porosität und der Porengrößenverteilung kann mittels Quecksilberporosimetrie erfolgen, wie dies in der DIN ISO 15901-1:2019-03: Quecksilberporosimetrie, beschrieben ist. Die zuletzt genannten mittleren Porendurchmesser gelten vor allem für den Einsatz von Ruß als leitfähige Partikel in der MPL. Durch den Einsatz von Graphit als leitfähige Partikel in der MPL oder den Einsatz von Porenbildnern lassen sich auch deutlich größere MPL-Poren erzeugen. Je nach Zusammensetzung ist der mittlere Porendurchmesser dann z. B. größer als 1 $\mu$m. Bei Einsatz verschiedener leitfähiger Partikel kann der Porendurchmesser eine bimodale oder polymodale Verteilungskurve aufweisen. So kann beim Einsatz einer Mischung aus Ruß und Graphit eine Verteilung des Porendurchmessers mit zwei Porenpeaks (ein Ruß- und ein Graphit-Peak) erhalten werden.

Die mikroporöse Lage B) weist vorzugsweise eine Dicke im Bereich von 5 bis 150 $\mu$m, besonders bevorzugt von 10 bis 100 $\mu$m auf. Diese Dicke bezieht sich auf den unkomprimierten Zustand der mikroporösen Lage B), d. h. vor der Nachbehandlung in Schritt iii) und vor dem Einbau der GDL in eine Brennstoffzelle.

Das Vorhandensein der MPL hat einen großen Einfluss auf den Wasserhaushalt der Brennstoffzelle. Aufgrund des hohen PTFE-Anteils und der kleineren Poren der MPL wird die Flutung der GDL und der Elektrode erschwert, indem die MPL als Flüssigwasserbarriere fungiert und somit den Massentransport der gasförmigen Reaktanden an den Katalysator begünstigt.

Die erfindungsgemäße Gasdiffusionslage weist vorzugsweise eine Dicke (Gesamtdicke aus Fasermaterial A) und MPL B)) im Bereich von 50 bis 1000 $\mu$m, besonders bevorzugt von 75 bis 500 $\mu$m auf. Diese Dicke bezieht sich auf den unkomprimierten Zustand der GDL, d. h. vor der Nachbehandlung in Schritt iii) und vor ihrem Einbau in eine Brennstoffzelle.

Weiterhin besitzen die Gasdiffusionsschichten bevorzugt eine hohe Gesamtporosität. Diese liegt vorzugsweise im Bereich von 20 % bis 80%, bestimmt, wie zuvor beschrieben, durch Quecksilber-Porosimetrie, gemessen mittels DIN ISO 15901-1:2019-03.

Verfahren zur Herstellung einer Gasdiffusionslage

Schritt i)

Bezüglich der in Schritt i) eingesetzten geeigneten und bevorzugten Fasermaterialien A) wird auf die vorherigen Ausführungen in vollem Umfang Bezug genommen.

Schritt ii)

Die in Schritt ii) eingesetzten Precursoren enthalten vorzugsweise wenigstens ein fluorhaltiges Polymer, wenigstens ein Kohlenstoffmaterial und gegebenenfalls wenigstens einen Porenbildner. Die fluorhaltigen Polymere sind vorzugsweise ausgewählt unter Polytetrafluorethylen (PTFE) und Tetrafluorethylen-Hexafluorpropylen-Copolymeren (FEP). Bevorzugt wird PTFE eingesetzt. Bevorzugt ist das Kohlenstoffmaterial ausgewählt unter Ruß, Graphit, Graphen, Kohlenstoffnanoröhren (CNT), Kohlenstoffnanofasern und Mischungen davon. Bevorzugt wird Ruß oder Graphit eingesetzt. In einer speziellen Ausführung enthalten die in Schritt b) eingesetzten Precursoren wenigstens einen Porenbildner. Geeignete Porenbildner sind kommerziell erhältliche Kunststoffpartikel, z. B. aus Polymethylmethacrylat (PMMA). Eine geeignete Teilchengröße liegt im Bereich von 10 bis 100 $\mu$m.

Bevorzugt beträgt der Volumenanteil der Poren in der fertigen mikroporösen Schicht, der auf den Einsatz eines Porenbildners zurückzuführen ist, 0 bis 70 Volumen-%, bezogen auf das Gesamtvolumen der Poren in der fertigen mikroporösen Schicht.

Das Auftragen der MPL auf das Fasermaterial kann auf verschiedene Arten erfolgen. Während in einer diskontinuierlichen Herstellung häufig Sprüh-, Siebdruck- oder Meyer-Rod-Verfahren eingesetzt werden, kommen bei der kontinuierlichen Beschichtung bevorzugt Rakel-, Schlitzdüsen- und Gravurwalzenprozesse zum Einsatz. Dabei können die MPL-Schichtdicke und die Eindringtiefe durch die Beschichtungsprozessparameter sowie die Viskosität der Beschichtung beeinflusst werden. Abschließend erfolgt eine erneute thermische Behandlung, z. B. in einem Trocknungs- und Sinterofen. Dabei kann zunächst eine Trocknung bei einer Temperatur von 100 bis 200 °C und anschließend eine Sinterung bei einer Temperatur von 300 bis 500°C erfolgen.

Der Nachbehandlungsschritt iii) wurde zuvor bereits umfassend beschrieben, worauf hier Bezug genommen wird.

Compression Set-Wert:

Von einer plastischen Verformung spricht man, wenn ein Material, wie eine Gasdiffusionslage, nach einer Belastung nicht wieder zu 100% in die ursprüngliche Form zurückkehrt, sondern eine permanente Formänderung zurückbleibt. Ein Teil der Verformung ist elastisch und somit reversibel, nur ein bestimmter Teil ist plastisch und bleibt dauerhaft bestehen. Die Eigenschaft eines Materials, seine Form permanent zu ändern, wenn eine Spannung angelegt wird, d.h. seine Verformbarkeit, wird auch mit dem Begriff "Setzen" bezeichnet. Materialien, die über eine geringe plastische Verformbarkeit verfügen, weisen ein geringes Setzverhalten auf.

Der Compression Set-Wert ist ein Maß dafür, wie sich ein Material, vorliegend eine GDL, bei einer Druckverformung und anschließender Entspannung verhält. GDLs werden beim Einsatz in Brennstoffzellen in der Regel stark verpresst (komprimiert). Zur Charakterisierung der Eigenschaften einer GDL infolge der Kompression kann der Anteil der elastischen und plastischen Verformung herangezogen werden. Der Compression Set ist die bleibende Verformung, die nach Aufhebung der einwirkenden Kraft verbleibt. Gasdiffusionslagen mit einem geringen Setzverhalten zeichnen sich durch geringe Compression Set-Werte aus. Die Bestimmung des Compression Set-Werts kann in der folgenden Art und Weise erfolgen. Es ist möglich, gleichzeitig die Werte weiterer physikalischer Größen, wie der Dicke, der Gasdurchlässigkeit, des elektrischen Widerstands, jeweils bei einer bestimmten Druckkraft und nach einmaliger oder mehrfacher Krafteinwirkung zu bestimmen.

Aus der zu prüfenden GDL werden über die gesamte Breite drei Proben (links, rechts und Mitte) entnommen aus denen ein Mittelwert gebildet wird. Weist das Material herstellungsbedingt eine Maschinenrichtung auf, so werden die Proben senkrecht zur Maschinenrichtung entnommen (CMD). Die Proben sind ringförmig mit einem inneren Durchmesser von 45 mm und einem äußeren Durchmesser von 56 mm. Die Probenfläche beträgt 8,72577 cm$^2$. In einer Prüfmaschine werden die Proben einer zeitlich veränderlichen Druckkraft ausgesetzt, die senkrecht auf die Fläche der Probe wirkt. Ein Sensor bestimmt die Änderung der Dicke der GDL im zeitlichen Verlauf bei dem jeweils einwirkenden Druck. Die Probe ist auf einer Vorrichtung zur Bestimmung der elastischen und plastischen Verformung mittels Kraftsensoren gelagert, wobei die Bewegung über Federn auf die Probe übersetzt wird. Der Verfahrweg bis zum Erreichen der maximalen Druckkraft wird über Wegsensoren bestimmt. Da die Verformung der Probe nichtlinear ist, wird der Messverlauf der relativen Veränderung angepasst. Ein Messzyklus, d.h. eine einmalige Belastung bis Maximaldruck und die folgende Entlastung dauert 1 min. Die Probe durchfährt drei Belastungszyklen. Der Anfangswert, bei dem nur eine geringe Kraft auf die Probe ausgeübt wird beträgt 0,025 MPa. Typische Druckwerte zur Bestimmung des Compression Set-Werts (und weiterer physikalischer Größen, wie der Dicke, der elektrischen Leitfähigkeit bzw. des Flächenwiderstands, der Gaspermeabilität, etc.) sind z.B. 0,6 MPa, 1,0 MPa und 2,4 MPa.

Der Compression Set-Wert für einen bestimmten Druck ergibt sich aus der Differenz der bei diesem Druck gemessenen Dicke im ersten Belastungszyklus und der bei diesem Druck im dritten Belastungszyklus gemessenen Dicke.

Bevorzugt weist die erfindungsgemäße GDL einen Compression Set-Wert bei 10 bar (1 MPa), gemessen nach dem zuvor beschriebenen Verfahren an einer ringförmigen Probe mit einem inneren Durchmesser von 45 mm und einem äußeren Durchmesser von 56 mm an einer GDL mit einem Flächengewicht von 90 bis 95 g/m$^2$ und einer MPL-Beladung von 15,0 bis 22,0 g/m$^2$ von höchstens 5 $\mu$m auf.

Rauheit:

Die Bestimmung der Rauheit kann nach üblichen, dem Fachmann bekannten Tastschnittverfahren erfolgen, wie sie z.B. in der DIN 4768-1:1974-08 mit dem Titel "Ermittlung der Rauheitsmeßgrößen $R_a$, $R_z$, $R_{max}$ mit elektrischen Tastschnittgeräten; Grundlagen" beschrieben sind.

Bestimmt wurde der Mittenrauwert $R_a$ (mittlerer Abstand eines Messpunktes auf der Oberfläche zur Mittellinie) und die gemittelte Rautiefe $R_z$. Die Messungen wurde mit einem Mahr-Messgerät Mahrsurf XCR20 mit Freitaster MFW-250 durchgeführt. Die Werte sind jeweils Durchschnittswerte aus 6 Bestimmungen: 3 in Maschinenrichtung (MD) und 3 senkrecht zur Maschinenrichtung (CD). Konkrete Messbedingungen sind im Beispielteil beschrieben, worauf hier Bezug genommen wird.

Durchstoßmessung, Shorting Number:

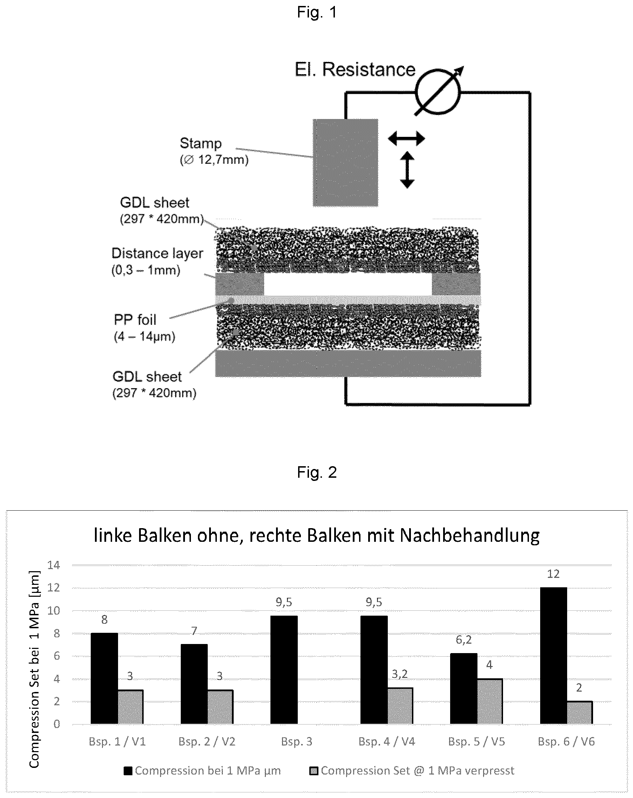

Figur 1 zeigt eine Vorrichtung für die Durchstoßmessung zur Bestimmung der Shorting Number als Messwert zur Charakterisierung der Wahrscheinlichkeit eines Kurzschlusses.

Bei der Durchstoßmessung wird eine PP-Folie (PP foil, Dicke 4 $\mu$m) zwischen zwei GDL-Proben (GDL sheet) und einer Distanzschicht (Distance layer), die eine definierte Dicke (0,1 bis 1,0 mm) und definierte Zwischenräume enthält, montiert. Die Materialien liegen dabei auf einer elektrisch leitfähigen und glatten Metallplatte. Während der Messung drückt ein Metallstempel (Stamp, Durchmesser 12,7 mm) langsam die obere GDL in den Zwischenraum der Distanzschicht ein und auf die PP-Folie. Der elektrisch leitfähige Druckstempel und die Metallplatte sind an eine Widerstandsmessung angeschlossen. Die Messung an einer Prüfstelle ist beendet, wenn der Maximaldruck erreicht ist. Ein Durchstoß durch die PP-Folie liegt vor, falls der Schwellwiderstand von 10 k$\Omega$ unterschritten wird. Der zugehörige Druck wird dokumentiert. Da die GDL selbst leitfähig ist, stellt diese Messung eine Beschädigung der PP-Folie durch die eingedrückte GDL fest. Bei einem Messdurchlauf werden üblicherweise 117 Messpunkte auf einer Fläche von ca. 300 x 400 mm abgefahren.

Versuche mit PP-Folien unterschiedlicher Dicke (4 - 14 $\mu$m) zeigten zudem, dass bei abnehmender Dicke der PP-Folien die Wahrscheinlichkeit für einen Durchstoß durch die Folie / Membran zunimmt bzw. dass die Anzahl der Durchstöße bei einer gewissen Anzahl an Messungen in derselben Material- / Messparameterkombination zunimmt. Es wurden für jede Kombination mindestens 117 Messungen (Standard: 4 Durchläufe à 117 Messungen) durchgeführt.

Die Shorting Number als Messwert zur Charakterisierung der Wahrscheinlichkeit eines Kurzschlusses ist folgendermaßen definiert:

$$\text{Shorting Number} =$$

$$(\text{Anzahl Messpunkte mit Durchstoß} / \text{Gesamtzahl Messpunkte}) \times 100$$

Mit anderen Worten, als Shorting Number wird das prozentuale Verhältnis zwischen Anzahl von Messungen mit unterschrittenem Schwellwiderstand und Gesamtanzahl an Messungen definiert. Je geringer die Anzahl von Messungen mit unterschrittenem Schwellwiderstand ist, desto kleiner ist die Shorting Number, desto geringer ist auch die Wahrscheinlichkeit der Penetration der Membran.

Bevorzug weist die erfindungsgemäße Gasdiffusionslage eine Shorting Number von höchstens 15 %, bestimmt mittels Durchstoßmessung an einer GDL von 297 x 420 mm Grundfläche mit einem Flächengewicht von 95 g/m$^2$ und einer MPL-Beladung von 15 g/m$^2$ auf.

Konkrete Messbedingungen sind im Beispielteil beschrieben, worauf hier Bezug genommen wird.

Weitere physikalische Größen:

Die Gaspermeabilität senkrecht zur Materialebene kann über eine Gurley-Messung ermittelt werden, für die ein automatisiertes Gurley-Densometer der Firma Gurley Precision Instruments verwendet kann. Bei der Messung wird die Zeit in Sekunden ermittelt, bis 100 cm$^3$ Luft bei konstanter Druckdifferenz senkrecht durch die GDL-Probe mit einer durchströmten Probenfläche von 6,42 cm$^2$ gestömt sind. Die Bestimmung der Luftdurchlässigkeit nach Gurley ist in der ISO 5636-5 beschrieben.

Die trockene Diffusionslänge bezeichnet die tatsächliche Länge der Strecke, die ein Gasmolekül durch das flächige Fasermaterial A) und/oder die mikroporöse Lage B) in $\mu$m zurücklegt. Sie wird bestimmt mittels stationärer Wicke-Kallenbach-Zelle.

Die Bestimmung der Dicke der Gasdiffusionslage kann nach der DIN 53855-1:1993-08 "Bestimmung der Dicke textiler Flächengebilde" erfolgen. Die Bestimmung der Dicke bei einer bestimmten Druckkraft (z.B. bei 0,025 MPa oder bei 1,0 MPa) kann in einer Vorrichtung zur Messung des Compression Sets, wie zuvor ausführlich beschrieben, erfolgen.

Die Bestimmung der flächenbezogenen Masse in g/m$^2$ kann nach EN 29073-1:1992 erfolgen.

Die Bestimmung der Porosität der GDL kann mittels Quecksilberporosimetrie erfolgen, wie dies in der DIN ISO 15901-1:2019-03: Quecksilberporosimetrie, beschrieben ist.

Brennstoffzelle

Ein weiterer Gegenstand der Erfindung ist eine Brennstoffzelle, umfassend wenigstens eine Gasdiffusionslage, wie zuvor definiert oder erhältlich durch ein Verfahren, wie zuvor definiert.

Prinzipiell eignet sich die erfindungsgemäße Gasdiffusionslage für alle üblichen Brennstoffzelltypen. Bevorzugt handelt es sich bei der erfindungsgemäßen Brennstoffzelle um eine Protonenaustauschmembran-Brennstoffzelle (englisch: proton exchange membrane fuel cell, PEMFC). Protonenaustauschmembran-Brennstoffzellen werden auch als Polymerelektrolytbrennstoffzelle (englisch: polymer electrolyte fuel cell, PEFC) oder Niedertemperatur-Polymerelektrolytmembran-Brennstoffzelle (englisch: low temperature polymer electrolyte membrane fuel cell, LT-PEMFC) bezeichnet. Eine spezielle Ausführung der Erfindung sind Wasser-Sauerstoff-Brennstoffzellen in Form von Niedertemperatur-Protonenaustauschmembran-Brennstoffzellen (PEMFC). Auf die zuvor gemachten Ausführungen zum Aufbau von Brennstoffzellen wird in vollem Umfang Bezug genommen.

Die erfindungsgemäßen Brennstoffzellen umfassen vorzugsweise eine Polymer-Elektrolyt-Membran, auf die auf der Anoden- und Kathodenseite eine Katalysatorschicht aufgebracht ist, die die Elektroden ausbildet. Bevorzugt befindet sich auf der Anoden- und/oder Kathodenseite eine Gasdiffusionslage (GDL) in Kontakt mit der Katalysatorschicht. Die Brennstoffzellen weisen speziell eine Polymer-Elektrolyt-Membran auf, auf die eine Katalysatorschicht aufgebracht ist, die mit der Oberfläche der mikroporösen Lage B) einer erfindungsgemäßen Gasdiffusionslage in Kontakt ist. Speziell weisen die Brennstoffzellen auf der Kathodenseite eine erfindungsgemäße Gasdiffusionslage auf, wobei die Katalysatorschicht mit der Oberfläche der mikroporösen Lage B) der Gasdiffusionslage in Kontakt ist. Spezieller weisen die Brennstoffzellen auf der Kathodenseite und auf der Anodenseite eine erfindungsgemäße Gasdiffusionslage auf, wobei sowohl die Kathodenschicht als auch die Anodenschicht jeweils mit der Oberfläche der mikroporösen Lage B) einer erfindungsgemäßen Gasdiffusionslage in Kontakt ist.

Es ist ein Vorteil der Erfindung, dass die Transportprozesse durch die Gasdiffusionslage gezielt an die Gradienten der durch die Brennstoffzelle strömenden Betriebsmedien und/oder der Betriebsparameter der Brennstoffzelle angepasst werden können. Dazu korrespondiert in der Regel wenigstens ein Eigenschaftsgradient der Gasdiffusionslage mit wenigstens einem der Eigenschaftsgradienten der durch die Brennstoffzelle strömenden Betriebsmedien und/oder der Betriebsparameter der Brennstoffzelle.

Ein weiterer Gegenstand der Erfindung ist die Verwendung einer Gasdiffusionslage, wie zuvor definiert, oder erhältlich durch ein Verfahren, wie zuvor definiert, in einer Protonenaustauschmembran-Brennstoffzelle.

FIGURENBESCHREIBUNG

Figur 1 zeigt eine Vorrichtung für die Durchstoßmessung zur Bestimmung der Shorting Number als Messwert zur Charakterisierung der Wahrscheinlichkeit eines Kurzschlusses.

Figur 2 zeigt jeweils die plastischen Verformungseigenschaften (Setzverhalten) anhand der Compression Set-Werte bei 1 MPa für 5 Paare aus je einer Vergleichs-GDL (linker Balken) und einer erfindungsgemäßen GDL (rechte Balken).

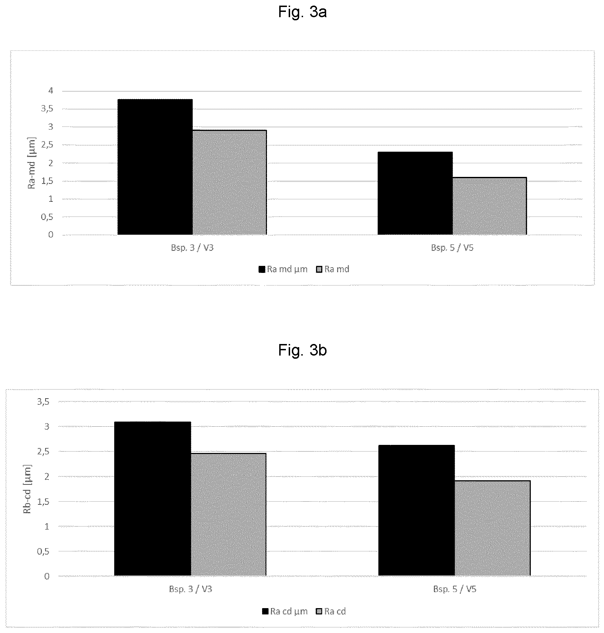

Figur 3a zeigt jeweils den Mittenrauwert $R_a$ (MD) bestimmt nach dem Tastschnittverfahren, wie es in der DIN 4768-1:1974-08 beschrieben ist, für 2 Paare aus je einer Vergleichs-GDL (linker Balken) und einer erfindungsgemäßen GDL (rechte Balken).

Figur 3b zeigt jeweils den Mittenrauwert $R_a$ (CD) bestimmt nach dem Tastschnittverfahren, wie es in der DIN 4768-1:1974-08 beschrieben ist, für 2 Paare aus je einer Vergleichs-GDL (linker Balken) und einer erfindungsgemäßen GDL (rechte Balken).

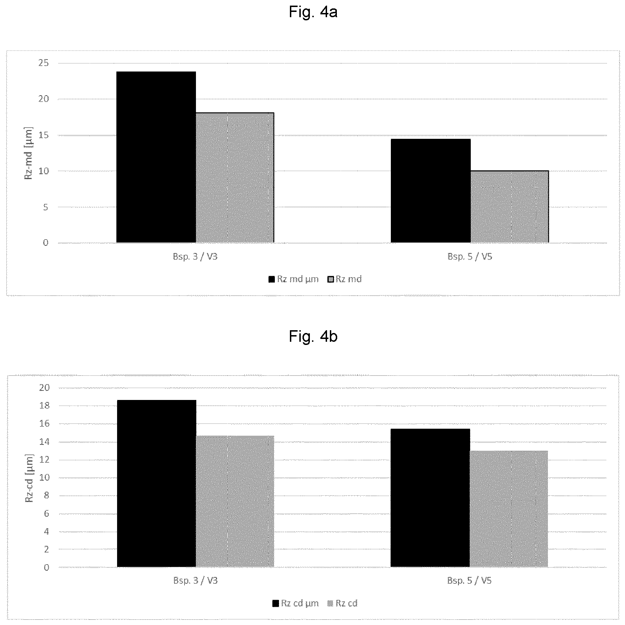

Figur 4a zeigt jeweils die gemittelte Rautiefe $R_z$ (MD) bestimmt nach dem Tastschnittverfahren, wie es in der DIN 4768-1:1974-08 beschrieben ist, für 2 Paare aus je einer Vergleichs-GDL (linker Balken) und einer erfindungsgemäßen GDL (rechte Balken).

Figur 4b zeigt jeweils die gemittelte Rautiefe $R_z$ (CD) bestimmt nach dem Tastschnittverfahren, wie es in der DIN 4768-1:1974-08 beschrieben ist, für 2 Paare aus je einer Vergleichs-GDL (linker Balken) und einer erfindungsgemäßen GDL (rechte Balken).

Die folgenden Beispiele dienen der Erläuterung der Erfindung, ohne sie in irgendeiner Weise zu beschränken.

BEISPIELE

I) Herstellung von Gasdiffusionslagen

Herstellungsbeispiel 1:

Herstellung Gasdiffusionslage ohne (Beispiel V1) und mit erfindungsgemäßer Nachbehandlung (Beispiel 1) bei erhöhtem Druck und erhöhter Temperatur

Zur Herstellung eines flächigen elektrisch leitfähigen Materials wurde ein Vliesstoff aus 100% Kohlenstofffasern mit einem Flächengewicht von 100 g/m$^2$ eingesetzt. Zur Ausrüstung des Vliesstoffs wurde eine Imprägnierzusammensetzung gemischt, die bezogen auf den Feststoff 80% Ruß und 20% PTFE enthielt. Die Ausrüstung erfolgte durch Foulard-Imprägnierung mit einer wässrigen Dispersion mit 15% Ausrüstungsgewicht bezogen auf die Masse des GDL-Substrat (entsprechend 15 g/m$^2$). Anschließend erfolgte noch eine Trocknung für 2 Minuten bei 80 °C und eine Sinterung für 2 Minuten bei 400 °C. Auf das so erhaltene Substrat wurde dann zur Herstellung der Gasdiffusionslagen noch eine MPL aufgebracht. Für die MPL-Beschichtung wurde auf das Fasermaterial eine MPL-Paste aufgetragen, die 2,0 Gew.-% PTFE und 7,8 Gew.-% Kohlenstoff in destilliertem Wasser enthielt. Anschließend wurde das Fasermaterial 2 Minuten bei 160 °C getrocknet und 2 Minuten bei 400 °C gesintert. Die resultierende MPL-Beladung betrug 15 g/m$^2$. Die erfindungsgemäßen GDL wurden einer Nachbehandlung in einer Doppelbandpress bei 25 bar Druck und einer Temperatur von 320 °C für 20 s unterzogen. Die nicht nachbehandelte GDL dient als Vergleich.

## II) Anwendungstechnische Beispiele

Folgende Materialien wurden zur Bestimmung der anwendungstechnischen Eigenschaften eingesetzt:

1) Beispiel 1 / V1
GDL aus Herstellungsbeispiel 1

2) Beispiel 2 / V2
GDL analog Herstellungsbeispiel 1 mit einem Flächengewicht von 100 g/m$^2$.

3) Beispiel 3 / V3
GDL analog Herstellungsbeispiel 1 mit einem Flächengewicht von 132 g/mz.

4) Beispiel 4 / V4
GDL analog Herstellungsbeispiel 1 mit einem Flächengewicht von 135 g/mz.

5) Beispiel 5 / V5
GDL analog Herstellungsbeispiel 1 mit einem Flächengewicht von 96,5 g/m$^2$.

6) Beispiel 6 / V6
GDL analog Herstellungsbeispiel 1 mit einem Flächengewicht von 94 g/m$^2$.

### Compression-Set

Die Ermittlung der Compression-Set-Werte und der Dicken erfolgte nach dem zuvor ausführlich beschriebenen Verfahren. Die Werte sind in der folgenden Tabelle 1 angegeben.

### Rauheit

Die Bestimmung der Rauheit erfolgte nach dem Tastschnittverfahren wie es in der DIN 4768-1:1974-08 beschrieben ist.
Bestimmt wurde der Mittenrauwert $R_a$ (mittlerer Abstand eines Messpunktes auf der Oberfläche zur Mittellinie) und die gemittelte Rautiefe $R_z$. Die Messungen wurde mit einem Mahr-Messgerät Mahrsurf XCR20 mit Freitaster MFW-250 durchgeführt. Die Werte sind jeweils Durchschnittswerte aus 6 Bestimmungen: 3 in Maschinenrichtung (MD) und 3 senkrecht zur Maschinenrichtung (CD).
Für die Messung wurden folgende Bedingungen gewählt:

Taster = MFW-250. Tast- Diamantradius 2$\mu$m, Kegelwinkel 60°
LC (GS) = 2,5mm = Cut Off = LT+LM
LT = 17,5mm = Taststrecke = 2,5 mm Vorlauf und 2,5 mm Nachlauf zum Ein- / Ausschwingen des Gaus-Filters. Diese 2 x 2,5 mm Weg werden in der Messung nicht berücksichtigt.
LM = 12,5mm = Messstrecke, welche zur Ermittlung des Rauheitswerts führt
Z =5 = Anzahl der Einzelmessungen für Rz-Wert. Messweg (Profil) wird hierbei in 5 symmetrische Einzelstrecken zerlegt (= LM / 5). Aus jeder Einzelstrecke wird der Mittelwert errechnet. Aus den 5 Mittelwerten wird der Rz- Wert gemittelt.
VB = +-250$\mu$m = Messbereich des Tasters
Profilauflösung pro Messstrecke = 100.000 Schritte
Linearität =< 1%
Tastkraft (Messkraft) = 0,8 mN
Tastgeschwindigkeit 0,5 mm / Sek.

### Durchstoßmessung, Shorting Number:

Die Durchstoßmessung zur Bestimmung der Shorting Number erfolgte, wie zuvor eingehend beschrieben. Bei einem Messdurchlauf wurden 117 Messpunkte auf einer Fläche von ca. 300 x 400 mm abgefahren. Die Ergebnisse sind Tabelle 1 zu entnehmen.
Die Gurley-Gaspermeabilität wurde jeweils senkrecht zur Materialebene mit einem Gurley-Densometer der Firma Gurley Precision Instruments gemäß ISO 5636-5 bestimmt. Die Ergebnisse sind ebenfalls Tabelle 1 zu entnehmen.

Die Trockendiffusionslänge wurde mit Hilfe einer stationären Wicke-Kallenbach-Zelle bestimmt. Die Ergebnisse sind ebenfalls Tabelle 1 zu entnehmen.

Tabelle 1

| Eigenschaft | Einheit | Beispiel | | | | | | | | | | | |
|---|---|---|---|---|---|---|---|---|---|---|---|---|---|
| | | V1 | 1 | V2 | 2 | V3 | 3 | V4 | 4 | V5 | 5 | V6 | 6 |
| Nachbehandlung bei erhöhtem p, T | | nein | ja | nein | ja | nein | ja | nein | ja | nein | ja | nein | ja |
| Dicke bei 0,025MPa | $\mu$m | 250 | 230 | 180 | 170 | 247 | 235 | 250 | 220 | 162 | | 190 | 170 |
| Dicke bei 1M Pa | $\mu$m | 210 | 200 | 150 | 141 | 215 | | 213 | 200 | 146 | 134 | 150 | 145 |
| Flächengewicht | g/m$^2$ | 135 | 135 | 100 | 97 | 132 | 132 | 134,5 | | 96,5 | | 94 | 94 |
| Compression Set bei 1 MPa (Differenz 1./3. Zyklus) | $\mu$m | 8 | 3 | 7 | 3 | 9,5 | | 9,5 | 3,2 | 6,2 | 4 | 12 | 2 |
| Gurley Gaspermeabilität | s | 2 | 70 | 30 | 70 | 37,4 | 67 | 30 | 63,5 | 31 | 57,5 | 65 | 85 |
| Trockene Diffusionslänge | $\mu$m | 700 | 800 | 640 | 640 | | | 833 | 842 | 593 | 618 | 602 | 623 |
| Rauheit $R_a$ (MD) | $\mu$m | 2,78 | 1,91 | | 1,79 | 3,77 | 2,90 | | 2,31 | 2,29 | 1,59 | | 1,81 |
| Rauheit $R_a$ (CD) | $\mu$m | 3,31 | 2,16 | | 1,96 | 3,08 | 2,45 | | 1,89 | 2,62 | 1,92 | | 2,39 |
| Rauheit $R_z$ (MD) | $\mu$m | 16,85 | 10,98 | | 11,47 | 23,77 | 18,07 | | 13,96 | 14,45 | 10,06 | | 12,2 |
| Rauheit $R_z$ (CD) | $\mu$m | 18,01 | 12,75 | | 10,98 | 18,62 | 14,65 | | 11,14 | 15,36 | 13,01 | | 13,63 |
| (MD) = in Maschinenrichtung, (CD) = senkrecht zur Maschinenrichtung | | | | | | | | | | | | | |

**Patentansprüche**

1. Verfahren zur Herstellung einer Gasdiffusionslage für eine Brennstoffzelle, umfassend

   A) ein flächiges elektrisch leitfähiges Fasermaterial und
   B) eine mikroporöse Lage auf wenigstens einer der Flächen des Fasermaterials, umfassend leitfähige Partikel in einer Matrix aus einem polymeren Bindemittel,

   bei dem man

   i) ein flächiges elektrisch leitfähigen Fasermaterial A) bereitstellt,
   ii) das in Schritt i) bereitgestellte Fasermaterial mit einem Precursor zur Ausbildung einer mikroporösen Lage beschichtet,
   iii) das in Schritt ii) erhaltene beschichtete Fasermaterial einer Nachbehandlung bei erhöhtem Druck und gegebenenfalls erhöhter Temperatur unterzieht.

2. Verfahren nach Anspruch 1 zur Erzielung einer Gasdiffusionslage mit einer oder mehreren der folgenden Eigenschaften:

   - einen Compression Set-Wert bei 1,0 MPa von höchstens 5 $\mu$m, bestimmt an einer GDL mit einem Flächengewicht von 95 bis 100 g/m$^2$ und einer MPL-Beladung von 15 bis 22 g/m$^2$ an einer ringförmigen Probe mit einem inneren Durchmesser von 45 mm und einem äußeren Durchmesser von 56 mm, wobei die Probe drei Belastungszyklen von 0,025 MPa auf 1,0 MPa unterzogen wird und sich der Compression Set-Wert aus der Differenz der bei 1,0 MPa gemessenen Dicke im ersten Belastungszyklus und im dritten Belastungszyklus ergibt,
   - einer Verringerung des Mittenrauwert $R_a$, bestimmt nach DIN EN ISO 4288:1998-04 mit dem Tastschnittverfahren, gegenüber einer nicht nachbehandelten Gasdiffusionslage von wenigstens 10%,
   - einer Verringerung der Rautiefe $R_z$, bestimmt nach DIN EN ISO 4288:1998-04 mit dem Tastschnittverfahren, gegenüber einer nicht nachbehandelten Gasdiffusionslage von wenigstens 10%,
   - einer Shorting Number von höchstens 25 %, bestimmt mittels Durchstoßmessung an einer GDL von 297 x 420 mm Grundfläche mit einem Flächengewicht von 95 g/m$^2$ und einer MPL-Beladung von 15 g/m$^2$.

3. Verfahren nach einem der Ansprüche 1 oder 2, wobei das Fasermaterial A) ausgewählt ist unter Kohlefaser-Vliesstoffen, Kohlefaser-Geweben und Mischungen davon.

4. Verfahren nach einem der vorhergehenden Ansprüche, wobei die Behandlung in Schritt iii) bei einem Druck im Bereich von 0,5 bis 10,0 MPa, bevorzugt von 1,5 bis 8,0 MPa, durchgeführt wird.

5. Verfahren nach einem der vorhergehenden Ansprüche, wobei die Behandlung in Schritt iii) bei einer Temperatur im Bereich von 100 bis 350°C, bevorzugt von 120 bis 330°C, besonders bevorzugt von 150 bis 320°C, durchgeführt wird.

6. Verfahren nach einem der vorhergehenden Ansprüche, wobei zur Behandlung in Schritt iii) eine Vorrichtung eingesetzt wird, ausgewählt unter Einetagenpressen, Mehretagenpressen, Endlos-Bandpressen, Kalandern und Kombinationen davon, bevorzugt ausgewählt unter Doppelbandpressen, Kalandern und Kombinationen davon.

7. Verfahren nach einem der vorhergehenden Ansprüche, wobei die Behandlung in Schritt iii) in einer Presse über einen Zeitraum von 5 Sekunden bis 5 Minuten, bevorzugt von 10 Sekunden bis 2 Minuten, durchgeführt wird.

8. Verfahren nach einem der vorhergehenden Ansprüche, wobei die Behandlung in Schritt iii) in einem Kalander über einen Zeitraum von größer 0 Sekunden bis 10 Sekunden, bevorzugt von 0,1 Sekunden bis 5 Sekunden, durchgeführt wird.

9. Verfahren nach einem der vorhergehenden Ansprüche, wobei die Behandlung in Schritt iii) in einem Kalander bei einem Liniendruck im Bereich von 5 bis 500 N/mm, vorzugsweise 10 bis 100 N/mm, erfolgt.

10. Gasdiffusionslage, erhältlich durch ein Verfahren, wie in einem der Ansprüche 1 bis 9 definiert.

11. Gasdiffusionslage für eine Brennstoffzelle, umfassend

A) ein flächiges elektrisch leitfähiges Fasermaterial und

B) eine mikroporöse Lage auf wenigstens einer der Flächen des Fasermaterials,

wobei die Gasdiffusionslage wenigstens eine der folgenden Eigenschaften aufweist:

- einen Compression Set-Wert bei 1,0 MPa von höchstens 5 $\mu$m, bestimmt an einer GDL mit einem Flächengewicht von 95 bis 100 g/m$^2$ und einer MPL-Beladung von 15 bis 22 g/m$^2$ an einer ringförmigen Probe mit einem inneren Durchmesser von 45 mm und einem äußeren Durchmesser von 56 mm, wobei die Probe drei Belastungszyklen von 0,025 MPa auf 1,0 MPa unterzogen wird und sich der Compression Set-Wert aus der Differenz der bei 1,0 MPa gemessenen Dicke im ersten Belastungszyklus und im dritten Belastungszyklus ergibt,
- einer Verringerung des Mittenrauwert $R_a$, bestimmt nach DIN EN ISO 4288:1998-04 mit dem Tastschnittverfahren, gegenüber einer nicht nachbehandelten Gasdiffusionslage von wenigstens 10%,
- einer Verringerung der Rautiefe $R_z$, bestimmt nach DIN EN ISO 4288:1998-04 mit dem Tastschnittverfahren, gegenüber einer nicht nachbehandelten Gasdiffusionslage von wenigstens 10%,
- einer Shorting Number von höchstens 25 %, bestimmt mittels Durchstoßmessung an einer GDL von 297 x 420 mm Grundfläche mit einem Flächengewicht von 95 g/m$^2$ und einer MPL-Beladung von 15 g/m$^2$.

12. Brennstoffzelle, umfassend wenigstens eine Gasdiffusionslage, wie in einem der Ansprüche 10 oder 11 definiert, oder erhältlich durch ein Verfahren, wie in einem der Ansprüche 1 bis 9 definiert.

13. Brennstoffzelle nach Anspruch 12, umfassend eine Polymer-Elektrolyt-Membran, auf die eine Katalysatorschicht aufgebracht ist, wobei die Katalysatorschicht mit der Oberfläche der mikroporösen Lage B) der Gasdiffusionslage in Kontakt ist.

14. Verwendung einer Gasdiffusionslage, wie in einem der Ansprüche 10 oder 11 definiert, oder erhältlich durch ein Verfahren, wie in einem der Ansprüche 1 bis 9 definiert, in einer Protonenaustauschmembran-Brennstoffzelle.

Fig. 1

Fig. 2

Fig. 3a

Fig. 3b

Fig. 4a

Fig. 4b

Europäisches Patentamt

European Patent Office

Office européen des brevets

# EUROPÄISCHER RECHERCHENBERICHT

**Nummer der Anmeldung**

EP 23 20 2959

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/029246 A1 (AKIYAMA TAKASHI [JP]) 31. Januar 2013 (2013-01-31) * Absätze [0166] - [0173] * ----- | 1-14 | INV. H01M4/86 H01M4/88 H01M8/1018 |
| X | WO 2020/165074 A1 (AVANTIUM KNOWLEDGE CENTRE BV [NL]) 20. August 2020 (2020-08-20) * Absätze [0052] - [0064] * * Ansprüche 1-14 * ----- | 1-14 | ADD. H01M8/10 |
| X | CN 114 430 050 A (SHANDONG RONFENG SPECIAL MAT CO LTD) 3. Mai 2022 (2022-05-03) * Ansprüche 1-10 * * Zusammenfassung * ----- | 1-14 | |
| X,D | EP 3 957 789 A1 (TORAY INDUSTRIES [JP]) 23. Februar 2022 (2022-02-23) * Ansprüche 1-15 * ----- | 1-14 | |
| X | CN 114 361 545 A (PEI SUPENG) 15. April 2022 (2022-04-15) * Zusammenfassung * * Ansprüche 7,8 * ----- | 1-14 | RECHERCHIERTE SACHGEBIETE (IPC) H01M |
| X | US 2013/337366 A1 (BLANCHET SCOTT [US] ET AL) 19. Dezember 2013 (2013-12-19) * Ansprüche 1-8 * * Absätze [0003], [0004], [0037] - [0040], [0049], [0052] - [0056] * ----- | 1-14 | |

Der vorliegende Recherchenbericht wurde für alle Patentansprüche erstellt

| Recherchenort | Abschlußdatum der Recherche | Prüfer |
|---|---|---|
| München | 10. Februar 2024 | Haering, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 2959

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2024

| Im Recherchenbericht angeführtes Patentdokument | Datum der Veröffentlichung | Mitglied(er) der Patentfamilie | Datum der Veröffentlichung |
|---|---|---|---|
| US 2013029246 A1 | 31-01-2013 | JP 5422699 B2 | 19-02-2014 |
| | | JP 2013048080 A | 07-03-2013 |
| | | US 2013029246 A1 | 31-01-2013 |
| WO 2020165074 A1 | 20-08-2020 | CN 113439132 A | 24-09-2021 |
| | | EP 3924536 A1 | 22-12-2021 |
| | | US 2022112613 A1 | 14-04-2022 |
| | | WO 2020165074 A1 | 20-08-2020 |
| CN 114430050 A | 03-05-2022 | KEINE | |
| EP 3957789 A1 | 23-02-2022 | EP 3957789 A1 | 23-02-2022 |
| | | JP 7276340 B2 | 18-05-2023 |
| | | JP WO2020213324 A1 | 22-10-2020 |
| | | KR 20210153029 A | 16-12-2021 |
| | | US 2022200012 A1 | 23-06-2022 |
| | | WO 2020213324 A1 | 22-10-2020 |
| CN 114361545 A | 15-04-2022 | KEINE | |
| US 2013337366 A1 | 19-12-2013 | BR 112014031304 A2 | 27-06-2017 |
| | | CA 2875821 A1 | 19-12-2013 |
| | | CN 104704664 A | 10-06-2015 |
| | | EP 2862221 A1 | 22-04-2015 |
| | | ES 2698062 T3 | 30-01-2019 |
| | | JP 6608277 B2 | 20-11-2019 |
| | | JP 2015526840 A | 10-09-2015 |
| | | KR 20150020675 A | 26-02-2015 |
| | | US 2013337366 A1 | 19-12-2013 |
| | | US 2019242021 A1 | 08-08-2019 |
| | | WO 2013188568 A1 | 19-12-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022002932 A1
- EP 3957789 A1
- WO 2020165075 A1
- JP 2007242378 A
- EP 3276718 A1
- EP 3396753 A1
- US 20190344405 A

**In der Beschreibung aufgeführte Nicht-Patentliteratur**

- **H. FUCHS ; W. ALBRECHT.** Vliesstoffe. Wiley-VCH